# EUROPEAN PATENT SPECIFICATION

(11) **EP 4 056 540 B1**
(45) Date of publication and mention of the grant of the patent: **15.11.2023**
(21) Application number: 21210716.3
(22) Date of filing: 26.11.2021
(51) Int. Cl.: C04B 35/58, C04B 35/626, C04B 35/64

(54) **METHOD FOR OBTAINING A HIGH REFRACTORY COMPOSITE FROM BORON CARBIDE AND INTERMETALLIC COMPOUND OF THE TI-SI SYSTEM**
VERFAHREN ZUR HERSTELLUNG EINES HOCHFEUERFESTEN VERBUNDWERKSTOFFS AUS BORCARBID UND INTERMETALLISCHER VERBINDUNG DES TI-SI-SYSTEMS
PROCÉDÉ D'OBTENTION D'UN COMPOSITE HAUTEMENT RÉFRACTAIRE À PARTIR DE CARBURE DE BORE ET D'UN COMPOSÉ INTERMÉTALLIQUE DU SYSTÈME TI-SI

(30) Priority: 08.03.2021 PL 43723221
(43) Date of publication of application: 14.09.2022
(73) Proprietor: Akademia Gorniczo-Hutnicza im. Stanislawa Staszica w Krakowie, 30-059 Krakow (PL)
(72) Inventor: Kozien, Dawid, Kraków (PL); Pedzich, Zbigniew, Kraków (PL); Chlubny, Leszek, Kraków (PL)
(74) Representative: Wlasienko, Jozef

(56) References cited:
- WO-A1-2007/115592
- US-A- 4 990 180
- ZHANG ET AL: "Reaction synthesis of TiB"2-SiC composites from TiH"2-Si-B"4C", MATERIALS LETTERS, ELSEVIER, AMSTERDAM, NL, vol. 25, no. 3-4, 1 November 1995 (1995-11-01), pages 97-100, XP022268702, ISSN: 0167-577X, DOI: 10.1016/0167-577X(95)00159-X
- PAN CHUANZENG ET AL: "Microstructure and Properties of TiB 2 -TiC-SiC Ternary Phase Ceramics Produced by High-Gravity Field Activated SHS of Ti-Si-B 4 C Powders", IOP CONFERENCE SERIES: MATERIALS SCIENCE AND ENGINEERING, vol. 381, 16 August 2018 (2018-08-16), page 012056, XP055912970, DOI: 10.1088/1757-899X/381/1/012056 Retrieved from the Internet: URL:https://iopscience.iop.org/article/10. 1088/1757-899X/381/1/012056>
- ZHANG ZHIXIAO ET AL: "Synthesis mechanism and mechanical properties of TiB2-SiC composites fabricated with the B4C-TiC-Si system by reactive", JOURNAL OF ALLOYS AND COMPOUNDS, ELSEVIER SEQUOIA, LAUSANNE, CH, vol. 619, 10 September 2014 (2014-09-10), pages 26-30, XP029077898, ISSN: 0925-8388, DOI: 10.1016/J.JALLCOM.2014.09.030
- RZEPA SYLWIA ET AL: "The Ti- Si intermetallic phases synthesis by SHS method", METAL 2018; 7TH INTERNATIONAL CONFERENCE ON METALLURGY AND MATERIALS, METAL 2018, 23-25, MAY, 2018, BRNO, CZECH REPUBLIC, EU, , 23 May 2018 (2018-05-23), pages 1699-1704, XP009535055, Retrieved from the Internet: URL:https://www.confer.cz/metal/2018/read/ 1298-the-ti-si-intermetallic-phases-synthe sis-by-using-shs-method.pdf

## Description

The subject matter of the invention relates to a method of obtaining a high-temperature refractory composite from boron carbide and an intermetallic compound of the Ti-Si system, intended for the components of gas turbines, components of rocket engines and structural components of flying vehicles operated at high temperatures. This composite belongs to a group of ultra high temperature ceramics (UHTC). The characteristic high resistance to corrosion and thermal shock enables its usage also for the cutting elements of cutting tools, parts of machines resistant to abrasion, electrodes for electro-erosion machining or materials for armour.

Ultra-high temperature ceramic UHTC composites are a class of materials with a low density and a high melting point, close to 3000°C or higher, which can be used for a long time at temperatures above 1650°C, maintaining high hardness and stiffness, and above all, chemical resistance. Chemically, UHTC composites are materials comprising two or more phases in which boron B, carbon C or nitrogen N are combined with one of the transition metals, such as zirconium Zr, hafnium Hf, titanium Ti, niobium Nb and tantalum Ta, (e.g. phases: HfB₂, ZrB₂, TiB₂, NbB₂, TaB₂, TiC, SiC, B₄C, BN).

The most commonly used techniques for producing UHTC composites are known techniques: hot-pressing and spark plasma sintering (SPS).

Currently, materials from UHTC group are usually synthesized by sintering a mixture of powders of phases that make up a composite with the possible addition of carbon in various forms (graphite, carbon black, nanotubes) as a phase that intensifies diffusion processes during sintering. The limitation of this method of synthesis is the necessity to use high temperatures, which cause grain growth in the sintered composite.

A ceramic composite from the group of UHTC materials based on hafnium diboride HfB₂ and a method of its production are known from the patent application PL425041 A1. The method is characterized in that additives in the form of silicon carbide SiC and/or boron carbide B₄C in the amount of 8 vol.% to 20 vol. % and graphene nanoflakes with an average grain size < 4 nm in the amount of 2 vol. % to 4 vol. % are added to a powder with hafnium diboride HfB₂ in the amount of 76 vol. % to 92 vol. % and the initial mixture is subjected to high-pressure high-temperature HPHT sintering at 7.2 GPa at 1700± 50°C.

A method of producing high-density UHTC composites in the ZrB₂-SiC-ZrC system is known from the patent specification EP2021302 B1. The method is characterized in that zirconium powders having purity higher than 98.5% and a grain size smaller than 44 µm are dry mixed with boron carbide powder having purity higher than 99.0% and a grain size smaller than 44 µm, and then mixed with graphite powder having a particle size in the range of 1 - 2 µm. A mixture obtained in this way is subjected to SHS synthesis and then is sintered by the Electric Current Activated Sintering (ECAS) method at temperatures ranging from 1600°C to 1900°C with a holding time of 10 to 20 minutes at the maximum temperature.

A method of producing UHTC composites of the B₄C-ZrB₂ system is known from the CN108484171B patent specification. The method is characterized in that the composite powder is produced in the process of sintering a mixture of B₄C, ZrB₂ powders, carbon black and metallic silicon. The mixture of powders is pressed isostatically in pressures ranging from 100 MPa to 500 MPa, and then is sintered freely in the temperature range of 1900°C - 2300°C with a holding time of 0.5 to 3 hours at the maximum temperature.

A prospective group of high-temperature refractory composites are materials of the B₄C-TiB₂-SiC system, which show a very advantageous combination of low density and a very high hardness and refractoriness. It is particularly advantageous to produce these materials with a high (over 50 wt.%) content of TiB₂ phase.

Methods of producing UHTC composites of the B₄C-TiB₂-SiC system have been described in scientific publications. For example, in the publication of S. Wang, Y. Deng, S. Gao, M. Yang, P. Xing, Microstructure and mechanical property of (TiB2-SiC) agglomerate-toughened B4C-TiB2-SiC composites, International Journal of Applied Ceramic Technology, (2020), a method of synthesizing a composite of the B₄C-TiB₂-SiC system from TiB₂-SiC agglomerates with the use of the hot-pressing method is described. The results obtained show in situ formation of TiB₂-SiC agglomerates in the obtained composite. The composites were obtained from commercial B₄C (contaminated with 0.04 wt% Al, 0.03 wt% Ca and 0.02 wt %) mixed with 10-30 wt% of TiSi₂ additive. The powder thus obtained was mixed with ZrO₂ by means of grinding media in a mill and was passed through a 40 mesh screen. The resulting composites were heated to 1800°C with an increase of 30°C/min, and then to 2050°C with an increase of 20°C/min. Hot pressing was carried out at a temperature of 2050°C under a pressure of 20 MPa for a period of 15 minutes in a vacuum.

Another publication of YWQ Liu, B. Zhang, H. Zhang, Y. Jin, Z. Zhong, J. Ye, Y. Ren, F. Ye, W. Wang, Microstructure and mechanical behaviour of transient liquid phase spark plasma sintered B4C-SiC-TiB2 composites from a B4C-TiSi2, Ceramic International (December 21, 2020) describes a method of obtaining B₄C-SiC-TiB₂ composite by *in situ* synthesis from B₄C and TiSi₂ starting materials. The starting materials including boron carbide (99% purity) were mixed with TiSi₂ in the following proportions by weight: 0.4%, 8%, 12% and 16% by weight. The obtained powders were milled in a rotary mill and sintered by the spark plasma sintering method (SPS) at 1800°C at the uniaxial pressure of 40 MPa in a vacuum atmosphere. Composites obtained by the SPS technique show higher density and lower porosity compared to materials obtained with the use of hot pressing.

The publication of Zhang Zhixiao et al. Synthesis mechanism and mechanical properties of TiB2-SiC composites fabricated with the B4C-TiC-Si system by reactive hot pressing, JOURNAL OF ALLOYS AND COMPOUNDS, vol.619 (September 10, 2014), pp.26-30, describes the manufacture of TiB₂-TiC-SiC composites by mixing in propanol ethanol powders of B₄C, TiC and Si, drying in a rotavapor, hot pressing in Ar under 30 MPa at 1900° for 60 minutes with a heat rate of 10°C/min.

Composites of the B₄C-SiC-TiB₂ system produced by SPS or hot pressing method usually contain agglomerated TiB₂-SiC phase grains in a boron carbide matrix. Due to poor homogenization, these materials develop cracks that propagate along the B₄C/TiB₂ interfaces (matrix / inclusions). Moreover, the composites of the B₄C-SiC-TiB₂ system contain small amounts of impurities resulting from the use of commercial powders and from the use of zirconium grinding media (ZrO₂). Usually, carbon residue is observed in the phase composition of the obtained composites, which reduces their mechanical strength.

As can be seen from the state of the art presented above, a high temperature, usually exceeding 2000° C, is often required for complete reaction and then concentration of the solid components of the reaction system, as well as the use of specialized equipment for firing, i.e. vacuum or protective atmosphere furnaces, and control and measurement equipment, which generates high costs decisive for the economics of technological processes.

The primary object of the method according to the present invention is to eliminate, from the final composition of a composite, unreacted carbon C, which is formed as a result of decomposition of boron carbide B₄C and negatively affects the strength of obtained materials. Furthermore, the aim of the proposed solution is to obtain the highest possible content of TiB₂ phase with the highest melting point (T = 3325°C) among the components of the composite , which will improve the refractoriness of the produced composite. Additionally, the invention aims to reduce the temperature of the process of producing a high-temperature refractory composite from boron carbide and an intermetallic compound of the Ti-Si system, which will reduce the production costs thereof, which are high in the currently known methods.

The essence of the method of obtaining a high-temperature refractory composite from boron carbide and an intermetallic compound of the Ti-Si system, which method comprises mixing starter powders in the form of boron carbide B₄C, an intermetallic compound of the Ti-Si system and carbon C in an alcohol environment, forming the mixture of powders into shaped pieces and subjecting them to sintering, is characterized in that, titanium silicide Ti₅Si₃ and carbon C are added to the boron carbide B₄C powder in the molar ratio of B₄C:Ti₅Si₃:C of 5:2:1. Subsequently, all components are mixed in isopropyl alcohol environment for 20-60 minutes and are dried until complete evaporation of the alcohol for 20-120 minutes; then, the shaped pieces are pre-formed and subjected to isostatic pressing at a pressure of 100 MPa - 200 MPa. The obtained compacts are subjected to free sintering in an argon atmosphere at a temperature of 1650-1750°C, with a temperature increase of 2°C - 10°C/minute and a holding time at the maximum temperature of 5-30 minutes, to obtain TiB₂-TiC-SiC-Ti₅Si₃ composite consisting of 70.0-75.0% TiB₂, 0.5-2.5% TiC, 20.0-27.5% SiC and 0.2-1.0% Ti₅Si₃ by weight A yield of a process is at least 99%.

The use, in the method according to the invention, of a set of substrates comprising B₄C powder in combination with a specific intermetallic compound of the Ti-Si system, in the form of titanium silicide Ti₅Si₃, made it possible to apply a lower sintering temperature than previously, namely in the range of 1650°C - 1750°C. It is also not required to use energy-consuming sintering methods that require specialized equipment, such as SPS or hot pressing. This is due to a chemical reaction that takes place between the reactants and facilitates thickening during sintering. In practice, there are possible methods of producing UHTC composites containing B₄C powder in combination with an intermetallic compound selected from the Ti-Si system with the use of various intermetallic phases, e.g. Ti₃Si, Ti₅Si₃, Ti₅Si₄, TiSi and TiSi₂. The mechanism of potential reactions is related to the type of an intermetallic phase used, and surprisingly it turned out that the simple and lower-temperature method according to the invention is possible only due to the use of a phase in the form of Ti₅Si₃ in combination with the appropriate molar proportions of the reactants used. The process leads to the elimination of carbon from the composition of the obtained composite. This is an unexpected effect, especially when using commercial boron carbide B₄C as a reactant, which usually contains carbon in the form of graphite. As a result, the obtained high-temperature refractory composite shows a higher mechanical strength and resistance to brittle fracture.

The high-temperature refractory composite obtained by the method according to the invention is also characterized by a very good homogeneity of the distribution of constituent phases in the microstructure, which makes it possible to obtain a high density and chemical purity of a composite in which the amount of unreacted phase from the starting reactants is less than 1%.

The advantage of the obtained composite is also a low density of the material. The advantageous phase composition of the composite, i.e. a high content of the TiB₂ phase compared to the state-of-the art composites made of boron carbide and an intermetallic compound of the Ti-Si system, enables the composite according to the invention to operate at high temperatures for a longer time while maintaining advantageous mechanical properties.

The method of obtaining a high-temperature refractory composite from boron carbide and an intermetallic compound of the Ti-Si system, according to the invention, is explained below in practical embodiments and in the drawing, in which Fig. 1 shows a diffractogram of the phase composition of the produced high-temperature refractory composite, Fig. 2 - a scanning microscope image of the surface microstructure of the sintered composite (over 500x), and Fig. 3 - an image of the microstructure of its fracture (over 10000x).

### Embodiment 1

The following powders were prepared: boron carbide B₄C, titanium silicide Ti₅Si₃ and carbon C. Commercial boron carbide B₄C powder (Boron carbide B₄C GRADE HS from Höganäs) containing phases: B₃C₂ (99%) and graphite (1%) was used. The self-propagating high-temperature synthesis SHS process described in the publication of S. Rzepa, L. Chlubny, T. Bucki, "The Ti - Si intermetallic phases synthesis by SHS method", METAL 2018 - 27th International Conference on Metallurgy and Materials, Conference Proceedings, 2018, pp. 1699-1704, was used to produce Ti₅Si₃ powder. Ti and Si powders were used in a molar ratio of 5:3. The mixture of powders was placed in a reactor with an argon atmosphere at an overpressure of 1.5 atm. The SHS reaction was initiated locally by the heat generated during the flow of a current through graphite foil placed in the mixture of powders. The amperage was 200 A and the flow time was 1 minute.

Titanium silicide Ti₅Si₃ and carbon C were added to boron carbide B₄C powder in the molar ratio B₄C:Ti₅Si₃:C of 5:2:1, and subsequently all components were mixed in a rotary-vibration mill in isopropyl alcohol environment for 30 minutes, and then dried until complete evaporation of the alcohol for 30 minutes. The powders obtained were preformed into disks having a diameter of 20 mm and a height of 10 mm and were subjected to isostatic pressing under a pressure of 200 MPa. The compacts obtained were subjected to free sintering in an argon atmosphere at the temperature of 1750°C, with the temperature increase of 10°/minute and the holding time at the maximum temperature of 5 minutes.

TiB₂-TiC-SiC-Ti₅Si₃ composite was obtained which consisted of 71.6% TiB₂, 1.4% TiC, 26.1% SiC and 0.9% Ti₅Si₃by weight. The process yield was 99%.

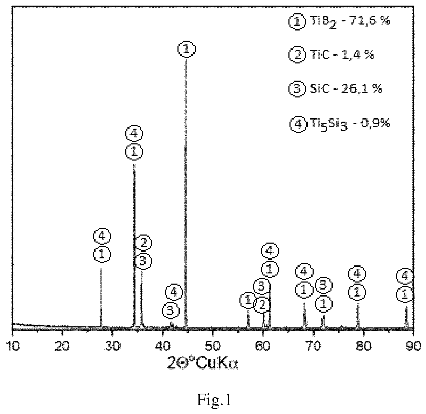

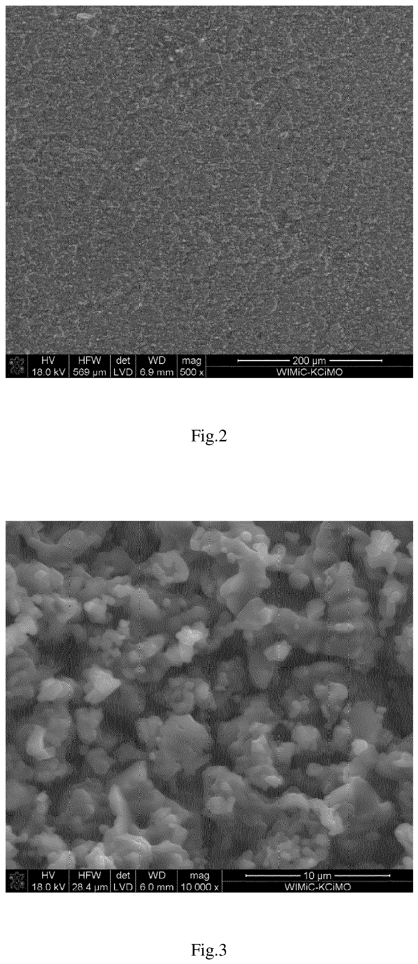

As it results from the diffractogram of the phase composition of the produced high-temperature refractory composite (Fig. 1), the obtained composite is characterized by a high content of TiB₂ phase and it also does not contain free carbon C. The apparent density of the TiB₂-TiC-SiC-Ti₅Si₃ composite is 3.7 g/cm³, which corresponds to 90% of the theoretical density of the material with this phase composition. The composite obtained is characterized by a homogeneous distribution of phases and grain sizes in the composite, as evidenced by the images of the surface (Fig. 2) and fracture (Fig. 3) of the composite.

### Embodiment 2

TisSi3 powder and C powder were added to B₄C powder in a molar ratio of B₄C:Ti₅Si₃:C of 5:2:1. The powders were used as in embodiment 1. All components were mixed in a rotary-vibration mill in isopropyl alcohol environment for 30 minutes with stirring, and then were dried until complete evaporation of the alcohol for 20 minutes. The powders obtained were preformed into cuboids having dimensions of 25 x 25 x 10 mm and were subjected to isostatic pressing under the pressure of 100 MPa. The compacts obtained were subjected to the free sintering process in an argon atmosphere at the temperature of 1650°C, with the temperature increase of 2°/minute and the holding time at the maximum temperature of 30 minutes.

TiB₂-TiC-SiC-Ti₅Si₃ composite was obtained which consisted of 70.2% TiB₂, 1.9% TiC, 27.1% SiC and 0.8% Ti₅Si₃ by wieght. Its apparent density was 3.67 g/cm³, which corresponds to 85% of the theoretical density of the material with such phase composition. The process yield was 99%.

## Claims

1. A method of obtaining a high-temperature refractory composite from boron carbide and an intermetallic compound of the Ti-Si system, comprising mixing starter powders in the form of boron carbide B₄C, an intermetallic compound of the Ti-Si system and carbon C in an alcohol environment, forming the mixture of powders into shaped pieces and subjecting them to sintering, **characterized in that** titanium silicide Ti₅Si₃ and carbon C are added to the boron carbide B₄C powder in a molar ratio of B₄C:Ti₅Si₃:C of 5:2:1, and subsequently all components are mixed in isopropyl alcohol environment for 20-60 minutes and are dried until complete evaporation of the alcohol for 20-120 minutes; then, the shaped pieces are pre-formed and subjected to isostatic pressing at a pressure of 100-200 MPa, and the compacts obtained are subjected to free sintering in an argon atmosphere at a temperature of 1650-1750°C with a temperature increase of 2-10°C/minute and a holding time at the maximum temperature of 5-30 minutes, to obtain TiB₂-TiC-SiC-Ti₅Si₃ composite consisting of 70.0-75.0% TiB₂, 0.5-2.5% TiC, 20.0-27.5% SiC and 0.2-1.0% Ti₅Si₃ by weight, with the process yield of at least 99%.

## Patentansprüche

1. Verfahren zur Herstellung eines hochtemperatur-feuerfesten Verbundwerkstoff aus Borcarbid und einer intermetallischen Verbindung des Ti-Si-Systems, umfassend: Mischen von Starterpulvern in Form von Borcarbid B₄C, einer intermetallischen Verbindung des Ti-Si-Systems und Kohlenstoff C in einem alkoholartigen Medium; Bilden des Gemisches von Pulvern zu Formstücken; und Unterziehen dieser dem Sintern, **dadurch gekennzeichnet, dass** Titansilicid Ti₅Si₃ und Kohlenstoff C zu dem Borcarbid-Pulver B₄C im Molverhältnis von B₄C : Ti₅Si₃ : C = 5 : 2 : 1 zugesetzt werden und anschließend alle Komponenten 20 bis 60 Minuten im Isopropylalkohol artigen Medium gemischt und bis zur vollständigen Verdampfung des Alkohols für 20 bis 120 Minuten getrocknet werden; dann die Formstücke vorgeformt und bei einem Druck von 100 bis 200 MPa einem isostatischen Pressen unterzogen werden; und die erhaltenen Formpressstücke einem freien Sintern in einer Argon-Atmosphäre bei einer Temperatur von 1650 bis 1750°C mit einem Temperaturanstieg von 2 bis 10°C/Minute und mit einer Haltezeit von 5 bis 30 Minuten bei der Höchsttemperatur unterzogen werden, sodass der TiB₂-TiC-SiC-Ti₅Si₃-Verbundwerkstoff bestehend aus 70,0-75,0 Gew.-% TiB₂, 0,5-2,5 Gew.-% TiC, 20,0-27,5 Gew.-% SiC und 0,2-1,0 Gew.-% Ti₅Si₃ mit einer Verfahrensausbeute von mindestens 99 % erhalten wird.

## Revendications

1. Procédé d'obtention d'un composite réfractaire à haute température à partir de carbure de bore et d'un composé intermétallique du système Ti-Si, consistant à mélanger des poudres de départ sous forme de carbure de bore B₄C, d'un composé intermétallique du système Ti-Si et de carbone C dans un environnement alcoolique, à former des formes à partir du mélange de poudres et à fritter les formes, **caractérisé par le fait que** le siliciure de titane Ti₅Si₃ et le carbone C sont ajoutés à la poudre de carbure de bore B₄C dans un rapport molaire B₄C:Ti₅Si₃:C de 5:2:1, puis tous les composants sont mélangés dans un environnement d'alcool isopropylique pendant 20 à 60 minutes et séchés jusqu'à évaporation complète de l'alcool pendant 20 à 120 minutes, ensuite les formes sont préformées et soumises à un pressage isostatique à une pression de 100 à 200 MPa, et les compacts obtenus sont soumis à un frittage libre dans une atmosphère d'argon, à une température de 1650-1750°C, avec une augmentation de température de 2-10°C/minute et un temps de maintien à la température maximale de 5-30 minutes, pour obtenir un composite TiB₂-TiC-SiC-Ti₅Si₃, composé de 70.0-75.0% de TiB₂, 0.5-2.5% de TiC, 20,0-27,5% de SiC et 0.2-1.0% de Ti₅Si₃ en poids, avec un rendement du procédé d'au moins 99%.
